# EUROPÄISCHE PATENTSCHRIFT

(11) **EP 1 158 184 B1**
(45) Veröffentlichungstag und Bekanntmachung des Hinweises auf die Patenterteilung: **31.08.2005**
(21) Anmeldenummer: 01112295.9
(22) Anmeldetag: 19.05.2001
(51) Int. Cl.: F16B 2/12, F21V 21/08, F16M 13/02

(54) **Halterung zur Fixierung eines Gegenstandes, insbesondere einer Leuchte**
Device for mounting an object, in particular a lamp
Dispositif de fixation d'un objet, en particulier une lampe

(30) Priorität: 24.05.2000 DE 10025180
(43) Veröffentlichungstag der Anmeldung: 28.11.2001
(73) Patentinhaber: MOLL SYSTEM- UND FUNKTIONS-MÖBEL GMBH, D-73344 Gruibingen (DE)
(72) Erfinder: Looser, Hans, 73117 Wangen (DE)
(74) Vertreter: Vetter, Hans

(56) Entgegenhaltungen:
- WO-A-93/21797
- GB-A- 632 302
- RU-C- 2 068 528
- US-A- 5 237 767
- US-A- 5 695 164

## Beschreibung

Die Erfindung betrifft eine Halterung zur Fixierung eines Gegenstandes, insbesondere einer Leuchte, am Randbereich eines plattenförmigen Möbelteils, gemäß dem Oberbegriff des Anspruchs 1.

Bei einer derartigen, aus der RU-2068528 bekannten Halterung wird mittels einer Rasteinrichtung eine Federkraft eingestellt, die die beiden Halteschenkel der Halterung gegeneinander an ein plattenförmiges Teil pressen. Eine feste Verrastung der beiden Halteschenkel zueinander findet nicht statt, und auch der Abstand zwischen den Halteschenkeln wird nicht eingestellt, sondern die Federkraft passt den Abstand an die Plattenstärke an. Dies hat den Nachteil, dass vor allem schwere Gegenstände nur unzureichend fixiert werden können, insbesondere bei beispielsweise in Folge Alterung nachlassender Federkraft.

Aus der GB 632 302 A ist eine mechanisch sehr aufwändige und großvolumige Halterung bekannt, bei der die Fixierung mittels zweier Handgriffe erfolgt.

Bei einer aus der US-A-5 237 776 bekannten Halterung wird ein loses Rastelement seitlich in Führungen eingeschoben, bis es im Eingriff mit einer Schrägverzahnung gelangt. Das lose Rast-Schiebeelement ist umständlich in der Betätigung und kann leicht verloren gehen.

Bei einer aus der DE-A-40 01 724 bekannten Halterung sind die beiden Halteschenkel mittels zweier Führungsbolzen gegeneinander verschiebbar, wobei der Abstand mittels einer Verstellschraube eingestellt werden kann. Mit Hilfe dieser Verstellschraube können die beiden Halteschenkel an eine Tischplatte oder dergleichen geklemmt werden. Nachteilig an der bekannten Halterung ist die Fixierung mittels der Verstellschraube, bei der zur Anpassung an verschiedene Tischplattenstärken vor allem bei stark unterschiedlichen Tischplatten eine Vielzahl von Umdrehungen erforderlich sind. Hierfür ist im allgemeinen ein Werkzeug erforderlich, beispielsweise ein Steck- bzw. Schraubenschlüssel. Das Lösen von der Tischplatte oder die Veränderung der Position an der Tischplatte erfolgt in ähnlich umständlicher Weise.

Eine Aufgabe der vorliegenden Erfindung besteht darin, eine Halterung der eingangs genannten Platten zu schaffen, die schnell und einfach verstellt und entsprechend schnell und einfach an Platten mit unterschiedlichen Plattenstärken fest fixiert und gelöst werden kann.

Diese Aufgabe wird erfindungsgemäß durch eine Halterung mit den Merkmalen des Anspruchs 1 gelöst.

Der Vorteil der erfindungsgemäßen Halterung besteht insbesondere in der Möglichkeit einer sehr schnellen und einfachen Anpassung an unterschiedliche Plattenstärken des plattenförmigen Möbelteils, in dem der bewegbare Halteschenkel schnell und einfach bis in die Anlageposition eingeschoben und verrastet werden kann, was vorzugsweise automatisch erfolgen kann. Dadurch, dass das Gegenrastelement U-förmig oder bügelartig ausgebildet und an den beiden freien Enden fixiert ist, wobei der mittlere Bereich an der Rastzahnung anliegt, können relativ große Haltekräfte durch das Gegenrastelement in der Raststellung erzeugt werden. Da der Rasteingriff lösbar ist, kann die Halterung in umgekehrter Weise wieder sehr schnell und einfach vom plattenförmigen Möbelteil abgenommen werden oder zur Veränderung der Position gelöst und in der neuen Position wieder fixiert werden. Hierzu sind keinerlei Hilfsmittel wie Schraubendreher, Schraubenschlüssel, Steckschlüssel oder dergleichen erforderlich. Auch eine sehr starke Veränderung der Spannweite der beiden Halteschenkel kann praktisch gleich schnell erfolgen.

Durch die in den Unteransprüchen aufgeführten Maßnahmen sind vorteilhafte Weiterbildungen und Verbesserungen der im Anspruch 1 angegebenen Halterung möglich.

Das Gegenrastelement liegt zweckmäßigerweise federnd an der Rastzahnung an, wobei ein Entrastelement zur elastischen Verformung des Gegenrastelements gegen die Federkraft aus der Raststellung heraus vorgesehen ist. Hierdurch erfolgt die Verrastung automatisch und lediglich zur Entrastung muss das Entrastelement betätigt werden.

Das Gegenrastelement besteht zweckmäßigerweise aus Federstahlblech, das große Kräfte aufnehmen kann oder es ist einstückig am Quersteg oder an einem Halteschenkel angeformt, was eine besonders kostengünstige Lösung darstellt.

Zur Entrastung des Gegenrastelements bei Betätigung des Entrastelements sind zweckmäßigerweise steg- oder zungenartige Auslösemittel am Entrastelement oder Gegenrastelement angeformt.

Auch das federnde Entrastelement ist vorzugsweise einstückig am Quersteg oder an einem Halteschenkel angeformt, um die Herstellungskosten niedrig zu halten.

Zur Ausbildung einer eindirektionalen Rastwirkung, die ein Auseinanderziehen der beiden Halteschenkel bei nichtbetätigtem Entrastelement verhindert, liegt das Gegenrastelement entsprechend schräg an der Rastzahnung an und/oder die Zähne der Rastzahnung besitzen asymmetrische Zahnflanken. Hierdurch kann der bewegliche Halteschenkel ohne Betätigung des Entrastelements bis an die Anlageposition am plattenförmigen Möbelteil, also bis in die Fixierposition geschoben werden, ohne dass das Entrastelement betätigt werden müsste. In der jeweils erreichten Position erfolgt dann die automatische Verrastung, die ein Wiederauseinanderziehen der beiden Halteschenkel verhindert. Dies ermöglicht eine noch einfachere Montage.

Zur Erhöhung der Stabilität und gleichzeitig zur Erzielung einer Führung besitzt die Rastzunge zweckmäßigerweise einen U-förmigen Querschnitt, ist an der Außenseite der Verbindungsleiste des U-Profils mit der Rastzahnung versehen und umgreift ein leistenartiges Führungselement am anderen Halteschenkel oder am Quersteg. Dieses kann dann in vorteilhafter Weise die vom Gegenrastelement ausgeübte Kraft aufnehmen.

Die Rastzunge und/oder wenigstens ein weiteres paralleles Führungselement am einen Halteschenkel ist zur Führung in oder an entsprechenden Führungseinrichtungen des anderen Halteschenkels ausgebildet, um die Haltekraft zwischen den beiden Halteschenkeln zu übertragen und die Verstellung und Veränderung der Spannweite zu erleichtern.

Um auch im fixierten Zustand noch eine Verschiebung entlang dem Randbereich des plattenförmigen Möbelteils zu ermöglichen, sind die Halteschenkel mit drehbar gelagerten Anlagewalzen zur Anlage am plattenförmigen Möbelteil versehen, deren Drehachsen im Wesentlichen parallel zu den Anlageebenen und senkrecht zur Ebene des Querstegs verlaufen. Zur Gewährleistung einer stabilen Lage besitzt wenigstens einer der Halteschenkel mindestens zwei Anlagewalzen.

Die Laufflächen der Anlagewalzen sind zweckmäßigerweise wenigstens teilweise mit einem gummielastischen Material versehen, um zum einen eine gute Haftung zu gewährleisten und zum anderen um die Möbeloberfläche nicht zu beschädigen, insbesondere bei der Verschiebung im verrasteten Zustand.

Insbesondere bei einer Ausbildung der Halterung zum Halten von relativ schweren Gegenständen, wie Monitore, Telefone oder dergleichen ist ein Halteschenkel mit einer Kniehebelspannvorrichtung versehen, die nach der beschriebenen Verrastung noch durch Umlegen eines Kniehebels eine erhöhte Halte-und Spannkraft ermöglicht.

Ein Ausführungsbeispiel der Erfindung ist in der Zeichnung dargestellt und in der nachfolgenden Beschreibung näher erläutert. Es zeigen:

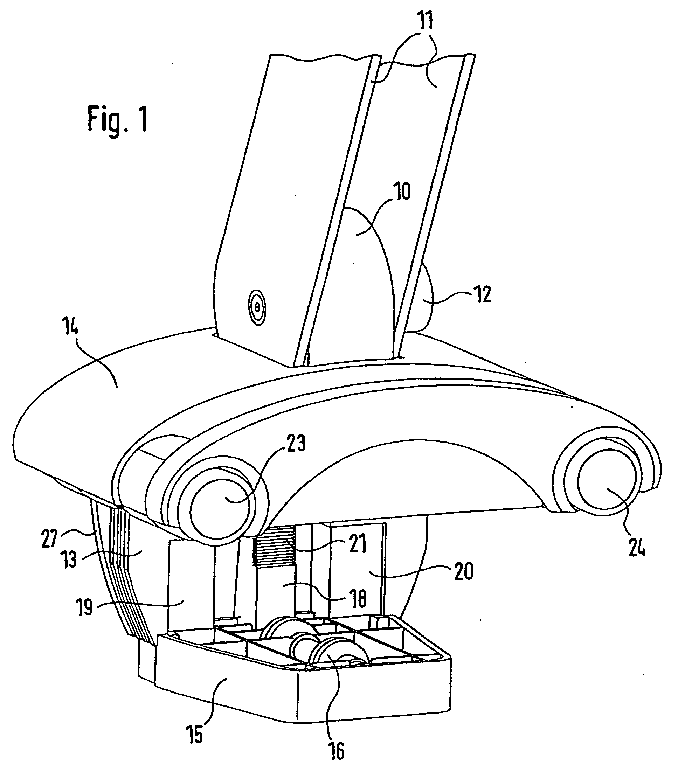

- Figur 1:: eine perspektivische Darstellung einer Halterung schräg von oben als Ausführungsbeispiel der Erfindung,

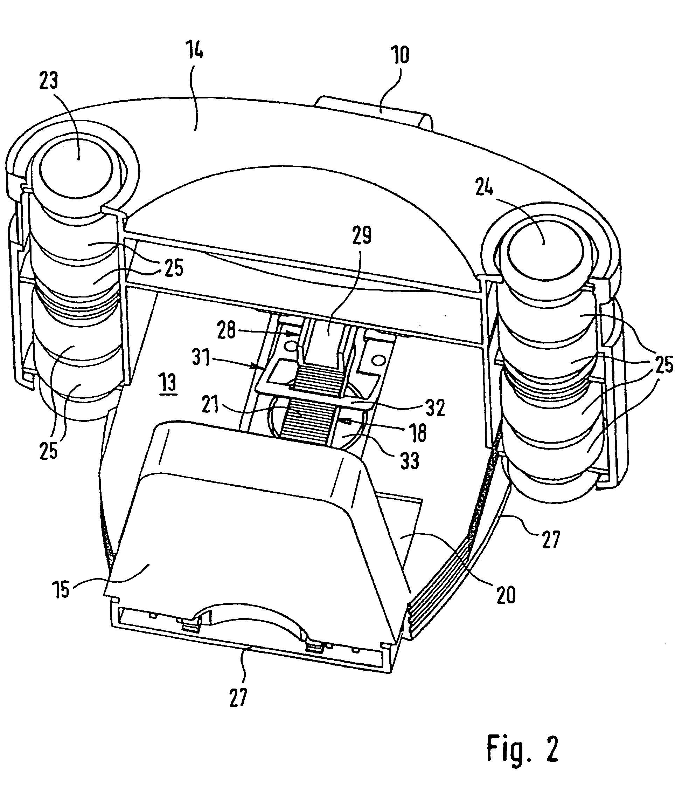

- Figur 2: eine entsprechende perspektivische Darstellung schräg von unten
- Figur 3: eine perspektivische Darstellung des mit der Rastzunge versehenen bewegbaren Halteschenkels,
- Figur 4: eine Detaildarstellung der Rastzahnung der Rastzunge,
- Figur 5: eine Vertikalschnittdarstellung dieser Halterung und
- Figur 6: eine schematische Darstellung eines mit einer Kniehebelspannvorrichtung versehenen Halteschenkels.

Die in den Figuren als Ausführungsbeispiel dargestellte Halterung dient zur Fixierung von Gegenständen am Randbereich eines nicht dargestellten plattenförmigen Möbelteils, beispielsweise eines Arbeitstisches. Hierzu besitzt die Halterung an ihrer Oberseite ein vorstehendes Fixierelement 10, an dem ein aus zwei Blechstreifen bestehender Haltearm 11 drehbar gelagert und mittels eines Fixierhebels 12 in der gewünschten Winkelstellung fixiert werden kann. Der Haltearm 11 kann selbstverständlich auch eine andere Gestalt besitzen. Zur Vereinfachung ist nur der untere Endbereich dieses Haltearms 11 dargestellt, während der obere Endbereich den zu haltenden Gegenstand trägt, beispielsweise eine Leuchte, ein Vorlagenhalter, ein Blendschutz, eine Telefonauflage, einen Monitortisch oder dergleichen.

Die beispielsweise an einer Tischplatte fixierbare Halterung besitzt eine im Wesentlichen U-förmige Gestalt mit zwei im Abstand zueinander von einem Quersteg 13 abstehenden, in der Gebrauchslage das plattenförmige Möbelteil zwischen sich haltenden Halteschenkeln 14, 15. Dabei ist der Quersteg 13 einstückig an den oberen Halteschenkel 14 angeformt. Diese Teile bestehen aus Kunststoff, jedoch ist prinzipiell auch eine Ausführung in Metall, beispielsweise Leichtmetall, möglich. Zur Gewichtsreduzierung sind die einzelnen Teile und Bereiche als Vollkammerteile mit Versteifungsstegen ausgebildet.

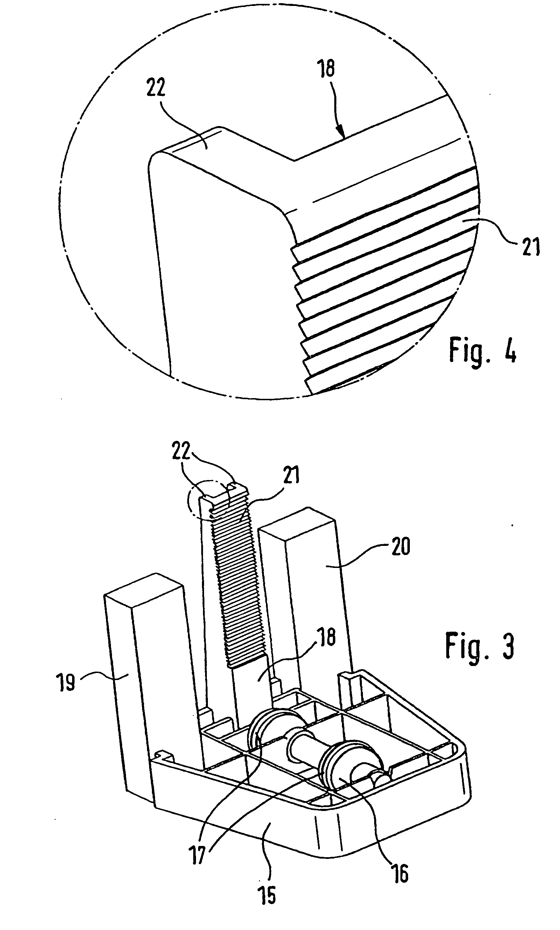

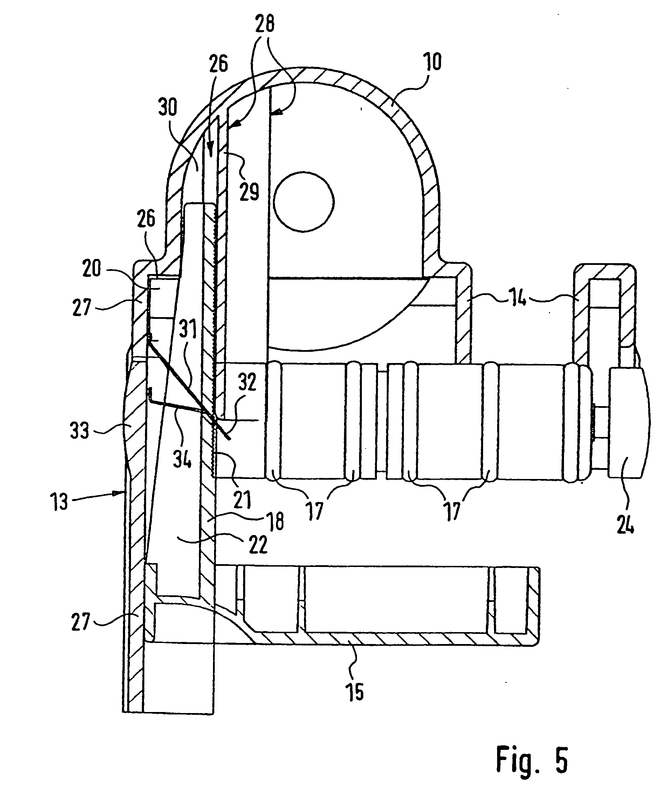

Der in den Figuren 3 und 4 separat dargestellte untere Halteschenkel 15 ist plattenartig in Hohlkammerbauweise ausgebildet. An der zur Anlage an der Unterseite eines plattenförmigen Möbelteils vorgesehenen oberen Anlagefläche dieses Halteschenkels 15 ist eine Anlagewalze 16 mittig drehbar gelagert. Die Drehachse dieser Anlagewalze 16 verläuft parallel zur Anlageebene derart, dass sie in der Gebrauchlage senkrecht zum Rand des plattenförmigen Möbelteils verläuft. An der Lauffläche dieser Anlagewalze 16 sind zwei gummielastische O-Ringe 17 angebracht. Alternativ hierzu könnte auch ein flächiger gummielastischer Belag aufgebracht sein. In einer einfacheren Ausführung kann die Anlagewalze 16 auch entfallen.

Von einem Randbereich des Halteschenkels 15 aus erstreckt sich eine Rastzunge 18 senkrecht zur Ebene des Halteschenkels 15, also zur Anlageebene. Zu beiden Seiten dieser Rastzunge 18 erstreckt sich parallel je ein säulenartiges Führungselement 19, 20 mit rechteckigem Querschnitt.

Die Rastzunge 18 besitzt ein U-förmiges Profil, wobei an der zur Anlagewalze 16 hinweisenden Außenseite der Verbindungsleiste des U-Profils eine Rastzahnung 21 eingeformt ist, deren Zähne quer zur Längsrichtung der Rastzunge 18 verlaufen. Die beiden Schenkel 22 des U-Profils der Rastzunge 18 verbreitern sich vom freien Ende aus zum Halteschenkel 15 hin.

Der obere mit dem Quersteg 13 versehene Halteschenkel 14 ist ebenfalls plattenartig als Hohlkammerteil mit Versteifungsstegen ausgebildet und besitzt eine gewölbte Oberseite. An den beiden seitlichen Endbereichen zu beiden Seiten des Quersteges 13 sind zwei Anlagewalzen 23, 24 drehbar gelagert. Ihre Drehachsen sind parallel zur Drehachse der Anlagewalze 16 ausgerichtet, und sie stehen ebenfalls, wie die Anlagewalze 16 geringfügig zur jeweiligen Anlageebene hin über die Begrenzungsfläche der Halteschenkel 14 bzw. 15 über. Auch diese Anlagewalzen 23, 24 besitzen gummielastische Oberflächenbeläge 25 zur Anlage an die jeweilige Oberseite eines plattenförmigen Möbelteils.

In Figur 5 sind als Alternative die oberen Anlagewalzen 23, 24 (nur die Anlagewalze 24 ist in der Schnittdarstellung zu sehen) nicht mit gummielastischen Oberflächenbelägen 25 sondern ebenso wie die untere Anlagewalze 16 mit gummielastischen O-Ringen 17 versehen. Weiterhin ist in Figur 5 zur Vereinfachung die untere Anlagewalze 16 nicht dargestellt, die selbstverständlich ebenfalls an Stelle von O-Ringen gummielastische Oberflächenbeläge aufweisen kann. Als weitere Möglichkeit können die gesamten Anlagewalzen 16, 23, 24 bis auf die Achsen aus gummielastischem Material bestehen.

Der Quersteg 13 und der sich daran in Verlängerung anschließende Bereich des Halteschenkels 14 besitzt die Führungsausnehmungen 26 zur Aufnahme und Führung der Führungselemente 19, 20 sowie der Rastzunge 18. Während die Führungsausnehmungen 26 für die Führungselemente 19, 20 in den Darstellungen schlecht erkennbar sind, wird die Rastzunge 18 gemäß Figur 5 zwischen der hinteren Wandung 27 des Querstegs 13 bzw. des Halteschenkels 14 und einer dazu parallelen Zwischenstrebe 28 mit U-förmigem Profil geführt. Dabei liegt die Rastzahnung 21 der Rastzunge 18 je nach Spannweite an der die Schenkel verbindenden Verbindungswandung 29 der Zwischenstrebe 28 an. Zusätzlich greift ein ebenfalls als innere Strebe ausgebildetes Führungselement 30 zwischen die Schenkel der Rastzunge 18 ein und dient als Gegenlager für die von einem Gegenrastelement 31 ausgeübte Kraft.

Das Gegenrastelement 31 ist als die Rastzunge 18 umgreifendes, U-förmiges Federstahlblechteil ausgebildet, dessen freie Enden der Schenkel an der hinteren Wandung 27 im Bereich des Halteschenkels 14 fixiert sind, beispielsweise durch Schrauben, Nieten, Vergießen und Verkleben. Von den Haltepunkten aus verläuft das Gegenrastelement 31 schräg zur Anlageebene hin, so dass sein Quersteg 32 schräg an der Rastzahnung 21 durch die Federkraft des Federstahls federnd anliegt. Hierdurch kann die Rastzunge 18 zwar in den Quersteg 13 bzw. den Halteschenkel 14 eingeschoben werden, indem der Quersteg 32 des Gegenrastelements 31 in Folge der Schrägstellung federnd entlang der Zähne der Rastzahnung 21 gleitet, jedoch erfolgt bei einer Gegenbewegung eine sofortige Verrastung. Dies kann noch durch asymmetrische Ausbildung der Zähne der Rastzahnung 21 verstärkt werden.

In der hinteren Wandung 27 ist durch Einbringen von Schlitzen ein Wandbereich als federndes Entrastelement 33 nach Art einer federnden Leiste mit Betätigungsfläche ausgebildet. Vom Gegenrastelement 31 erstrecken sich zwei einstückig angeformte elastische Auslösezungen 34 (in Figur 5 nur eine erkennbar) zum Entrastelement 33 aus. Wird das Entrastelement 33 durch Eindrücken betätigt, so verschieben die Auslösezungen 34 das Gegenrastelement 31 aus der verrasteten Stellung in der Rastzahnung 21 heraus, so dass die Rastzunge 18 und die Führungselemente 19, 20 beim Auseinanderziehen der beiden Halteschenkel 14, 15 herausgezogen werden können.

Beim Fixieren der Halterung beispielsweise an einer Tischplatte ist es daher lediglich erforderlich, die beiden Halteschenkel 14, 15 um einen Randbereich der Tischplatte herumzulegen und dann zusammenzudrücken, wobei eine automatische Verrastung bewirkt wird. Zum Lösen wird das Entrastelement 33 betätigt, so dass eine Entrastung bewirkt wird und der Halteschenkel 15 nach unten gezogen werden kann.

In Abwandlung des dargestellten Ausführungsbeispiels können die Auslösezungen 34 oder eine Auslösezunge auch am Entrastelement 33 angeformt sein. Weiterhin kann das Gegenrastelement 31 ebenso wie das Entrastelement 33 einstückig an der hinteren Wandung 27 angeformt sein und dann ebenfalls aus Kunststoff bestehen. Es muss dann gegebenenfalls etwas größer dimensioniert werden. Eine weitere Alternative besteht darin, dass das Gegenrastelement am Entrastelement 33 befestigt oder angeformt ist, wobei auch an Stelle einer schrägen Anlage eine senkrechte Anlage des Entrastelements 33 an der Rastzahnung 21 möglich ist. In diesem Falle muss das Entrastelement 33 auch beim Einschieben der Rastzunge 18 betätigt sein. Zur Aufnahme der Haltekraft muss das Entrastelement 33 dann entsprechende Stützelemente besitzen.

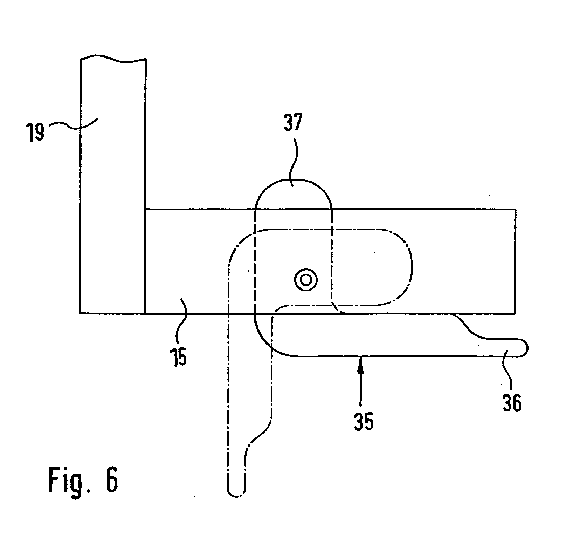

In Figur 6 ist der untere Halteschenkel 15 schematisch in einer Seitenansicht dargestellt. Er ist mit einer Kniehebelspannvorrichtung zur Erhöhung der Spannkraft in der verrasteten Stellung versehen. Ein L-förmiger Kniehebel 35 ist dabei schwenkbar im Halteschenkel 15 gelagert. Der mit durchgezogener Linie dargestellte Kniehebel 35 zeigt dabei die Spannstellung und die strichpunktierte Linie den Kniehebel 35 in der gelösten Stellung. Bei der Montage werden zunächst die beiden Halteschenkel 14, 15 in der beschriebenen Weise um den Randbereich eines plattenförmigen Möbelteils verrastet. Nun wird der Kniehebel 35 von der strichpunktierten Stellung in die mit einer durchgezogenen Linie dargestellte Spannstellung umgelegt, so dass das vom Betätigungsende 36 entgegengesetzte Spannende 37 des Kniehebels 35 zur Anlageebene hin aus dem Halteschenkel 15 herausgeschwenkt wird und die Klemmkraft vergrößert.

In den Ausführungsbeispielen sind die Halteschenkel 14, 15 exakt senkrecht zum Quersteg 13 angeordnet. Um die bei einer Spannkraftbeaufschlagung beim Anklemmen an eine Tischplatte auftretende elastische Verformung auszugleichen, kann wenigstens einer der Halteschenkel, beispielsweise der Halteschenkel 15, auch einen Winkel zum Quersteg bzw. zur Rastzunge 18 und den Führungselementen 19, 20 aufweisen, der geringfügig kleiner als 90° ist. Dieser Winkel kann dann so bemessen sein, dass beim Spannen wieder ein Winkel von 90° durch elastische Dehnung erreicht wird.

## Patentansprüche

1. Halterung zur Fixierung eines Gegenstandes, insbesondere einer Leuchte, am Randbereich eines plattenförmigen Möbelteils, die in der Gebrauchslage eine im Wesentlichen U-förmige Gestalt mit zwei im Abstand zueinander von einem Quersteg abstehenden, das plattenförmige Möbelteil zwischen sich haltenden Halteschenkeln aufweist, wobei Mittel zur Verstellung des Abstands zwischen den Halteschenkeln vorgesehen sind, und wobei der eine Halteschenkel (15) im Bereich des Querstegs (13) wenigstens eine in den anderen Halteschenkeln (14) oder in den Quersteg (13) eingreifende, mit einer Rastzahnung (21) versehene Rastzunge (18) besitzt, die senkrecht zu den Anlageebenen der Halteschenkel (14, 15) verschiebbar im anderen Halteschenkel (14) oder im Quersteg (13) geführt ist und dort im lösbaren Rasteingriff mit einem Gegenrastelement (31) steht, **dadurch gekennzeichnet, dass** das Gegenrastelement (31) federnd an der Rastzahnung anliegt und U-förmig oder bügelartig ausgebildet und an den beiden freien Enden fixiert ist, wobei der mittlere Bereich (32) an der Rastzahnung im verrasteten Zustand anliegt.

2. Halterung nach Anspruch 1, **dadurch gekennzeichnet, dass** ein Entrastelement (33) zur elastischen Verformung des Gegenrastelements (31) gegen die Federkraft aus der Raststellung heraus vorgesehen ist.

3. Halterung nach Anspruch 1 oder 2, **dadurch gekennzeichnet, dass** das Gegenrastelement (31) aus Federstahlblech besteht oder einstückig am Quersteg (13) oder an einem Halteschenkel angeformt ist.

4. Halterung nach einem der vorhergehenden Ansprüche, **dadurch gekennzeichnet, dass** steg- oder zungenartige Auslösemittel (34) am Gegenrastelement (31) angeformt sind.

5. Halterung nach einem der vorhergehenden Ansprüche, **dadurch gekennzeichnet, dass** das federelastische Entrastelement (33) einstückig am Quersteg (13) oder einem Halteschenkel angeformt ist.

6. Halterung nach einem der vorhergehenden Ansprüche, **dadurch gekennzeichnet, dass** zur Ausbildung einer eindirektionalen Rastwirkung, die ein Auseinanderziehen der beiden Halteschenkel (14, 15) verhindert, jedoch ein Gegeneinanderschieben ermöglicht, das Gegenrastelement (31) entsprechend schräg an der Rastzahnung (21) anliegt und/oder die Zähne der Rastzahnung (21) entsprechend asymmetrische Zahnflanken besitzen.

7. Halterung nach einem der vorhergehenden Ansprüche, **dadurch gekennzeichnet, dass** die Rastzunge (18) einen U-förmigen Querschnitt besitzt, an der Außenseite der Verbindungsleiste des U-Profils mit der Rastzahnung (21) versehen ist und ein leistenartiges Führungselement (30) am anderen Halteschenkel (14) oder am Quersteg (13) umgreift.

8. Halterung nach einem der vorhergehenden Ansprüche, **dadurch gekennzeichnet, dass** die Rastzunge (18) und oder wenigstens ein weiteres paralleles Führungselement (19, 20) am einen Halteschenkel (15) zur Führung in oder an entsprechenden Führungseinrichtungen (26 bis 30) des anderen Halteschenkels (14) und/oder des Querstegs (13) ausgebildet ist.

9. Halterung nach einem der vorhergehenden Ansprüche, **dadurch gekennzeichnet, dass** die Halteschenkel (14, 15) mit drehbar gelagerten Anlagewalzen (23, 24, 16) zur Anlage am plattenförmigen Möbelteil versehen sind, deren Drehachsen im Wesentlichen parallel zu den Anlageebenen und senkrecht zur Ebene des Querstegs (13) verlaufen.

10. Halterung nach Anspruch 9, **dadurch gekennzeichnet, dass** wenigstens einer der Halteschenkel (14) mindestens zwei Anlagewalzen (23, 24) besitzt.

11. Halterung nach Anspruch 9 oder 10, **dadurch gekennzeichnet, dass** die Laufflächen der Anlagewalzen (16, 23, 24) wenigstens teilweise mit einem gummielastischem Material (17, 25) versehen sind.

12. Halterung nach einem der vorhergehenden Ansprüche, **dadurch gekennzeichnet, dass** ein Halteschenkel (15) mit einer Kniehebelspannvorrichtung (35) versehen ist.

## Claims

1. Fastening device for fixing an object, in particular a light, to the edge area of a board-shaped furniture part, which in the position of use has a substantially U-shaped form with two clamping legs projecting outwards from a transverse web at a distance from one another and holding the board-shaped furniture part between them, wherein means of adjusting the distance between the clamping legs are provided, and wherein one clamping leg (15) has in the area of the transverse web (13) at least one locking tongue (18) provided with a locking tooth system (21) for engaging with the other clamping leg (14) or with the transverse web (13) and guided slidably at right-angles to the contact planes of the clamping legs (14, 15) in the other clamping leg (14) or in the transverse web (13) where it is in locking engagement with a mating locking element (31), **characterised in that** the mating locking element (31) is in sprung contact with the locking teeth and is U-shaped or bow-like and is fixed at the two free ends, wherein the central section (32) fits up against the locking tooth system in the locked state.

2. Fastening device according to claim 1, **characterised in that** an unlocking element (33) is provided for elastic deformation of the mating locking element (31) out of the locked position against the spring force.

3. Fastening device according to claim 1 or 2, **characterised in that** the mating locking element (31) is made of spring steel sheet or is moulded integrally to the transverse web (13) or one of the clamping legs.

4. Fastening device according to any of the preceding claims, **characterised in that** web-or tongue-like release means (34) are moulded on to the mating locking element (31).

5. Fastening device according to any of the preceding claims, **characterised in that** the spring-elastic unlocking element (33) is moulded integrally to the transverse web (13) or one of the clamping legs.

6. Fastening device according to any of the preceding claims, **characterised in that**, to create a unidirectional locking effect which prevents pulling apart of the two clamping legs (14, 15) but allows pushing together, the mating locking element (31) fits up at a suitable oblique angle against the locking teeth (21) and/or the teeth of the locking tooth system (21) have suitably asymmetric teeth sides.

7. Fastening device according to any of the preceding claims, **characterised in that** the locking tongue (18) has a U-shaped cross-section, is provided on the outside of the connecting strip of the U-profile with the locking tooth system (21), and encompasses a rail-like guide element (30) on the other clamping leg (14) or the transverse web (13).

8. Fastening device according to any of the preceding claims, **characterised in that** the locking tongue (18) and/or at least one further parallel guide element (19, 20) are/is provided on the one clamping leg (15) for guidance in or on corresponding guiding devices (26 to 30) of the other clamping leg (14) and/or the transverse web (13).

9. Fastening device according to any of the preceding claims, **characterised in that** the clamping legs (14, 15) are provided with rotatably mounted contact rollers (23, 24, 16), for contact with the board-shaped furniture part, and which have rotation axes running substantially parallel to the contact planes and at right-angles to the plane of the transverse web (13).

10. Fastening device according to claim 9, **characterised in that** at least one of the clamping legs (14) has at least two contact rollers (23, 24).

11. Fastening device according to claim 9 or 10, **characterised in that** the treads of the contact rollers (16, 23, 24) are provided at least partly with a rubber-elastic material (17, 25).

12. Fastening device according to any of the preceding claims, **characterised in that** one clamping leg (15) is provided with a toggle clamping device (35).

## Revendications

1. Dispositif de fixation d'un objet, en particulier d'une lampe, dans la zone de bordure d'une partie de meuble en forme de plaque, lequel dispositif en position d'utilisation présente une forme sensiblement en U avec deux branches de retenue maintenant entre elles la partie de meuble en forme de plaque et partant à distance l'une de l'autre d'une entretoise transversale, des moyens étant prévus pour régler la distance entre les branches de retenue, et une branche de retenue (15) présentant, dans la zone de l'entretoise transversale (13), au moins une languette d'encliquetage (18) pourvue d'une denture d'encliquetage (21) et s'engageant dans l'autre branche de retenue (14) ou dans l'entretoise transversale (13), et qui est guidée perpendiculairement aux plans de contact des branches de retenue (14, 15) de manière à pouvoir coulisser dans l'autre branche de retenue (14) ou dans l'entretoise transversale (13), et y est en prise d'encliquetage séparable avec un contre-élément d'encliquetage (31), **caractérisé en ce que** le contre-élément d'encliquetage (31) s'applique de manière élastique contre la denture d'encliquetage et est réalisé en forme de U ou à la manière d'un étrier et est fixé aux deux extrémités libres, la zone centrale (32) s'appliquant contre la denture d'encliquetage à l'état encliqueté.

2. Dispositif de fixation selon la revendication 1, **caractérisé en ce qu'**il est prévu un élément de désencliquetage (33) pour la déformation élastique du contre-élément d'encliquetage (31) à l'encontre de la force de ressort et hors de la position d'encliquetage.

3. Dispositif de fixation selon la revendication 1 ou 2, **caractérisé en ce que** le contre-élément d'encliquetage (31) est constitué en tôle d'acier à ressort ou est formé d'une seule pièce sur l'entretoise transversale (13) ou sur une branche de retenue.

4. Dispositif de fixation selon l'une des revendications précédentes, **caractérisé en ce que** des moyens de déverrouillage (34) de type barrette ou languette sont formés sur le contre-élément d'encliquetage (31).

5. Dispositif de fixation selon l'une des revendications précédentes, **caractérisé en ce que** l'élément de désencliquetage (33) présentant l'élasticité d'un ressort est formé d'une seule pièce sur l'entretoise transversale (13) ou sur une branche de retenue.

6. Dispositif de fixation selon l'une des revendications précédentes, **caractérisé en ce que** pour réaliser un effet d'encliquetage unidirectionnel, qui empêche un écartement des deux branches de retenue (14, 15), mais permet un rapprochement, le contre-élément d'encliquetage (31) s'applique de façon correspondante obliquement contre la denture d'encliquetage (21) et/ou les dents de la denture d'encliquetage (21) possèdent des flancs de dent convenablement asymétriques.

7. Dispositif de fixation selon l'une des revendications précédentes, **caractérisé en ce que** la languette d'encliquetage (18) présente une section transversale en forme de U, est pourvue, sur le côté extérieur de la barrette de liaison du profilé en U, de la denture d'encliquetage (21) et entoure un élément de guidage (30) de type baguette sur l'autre branche de retenue (14) ou sur l'entretoise transversale (13).

8. Dispositif de fixation selon l'une des revendications précédentes, **caractérisé en ce que** la languette d'encliquetage (18) et/ou au moins un autre élément de guidage (19, 20) parallèle est réalisé sur une branche de retenue (15) pour le guidage dans ou sur des dispositifs de guidage (26 à 30) corrrespondants de l'autre branche de retenue (14) et/ou de l'entretoise transversale (13).

9. Dispositif de fixation selon l'une des revendications précédentes, **caractérisé en ce que** les branches de retenue (14, 15) sont pourvues de cylindres de contact (23, 24, 16), montés tournants, pour l'application contre la partie de meuble en forme de plaque, dont les axes de rotation s'étendent sensiblement parallèlement aux plans de contact et perpendiculairement au plan de l'entretoise transversale (13).

10. Dispositif de fixation selon la revendication 9, **caractérisé en ce qu'**au moins l'une des branches de retenue (14) possède au moins deux cylindres de contact (23, 24).

11. Dispositif de fixation selon la revendication 9 ou 10, **caractérisé en ce que** les surfaces de roulement des cylindres de contact (16, 23, 24) sont garnies en partie au moins d'un matériau (17, 25) présentant l'élasticité du caoutchouc.

12. Dispositif de fixation selon l'une des revendications précédentes, **caractérisé en ce qu'**une branche de retenue (15) est pourvue d'un dispositif de serrage (35) à genouillère.
